# EUROPEAN PATENT SPECIFICATION

(11) **EP 2 163 043 B1**
(45) Date of publication and mention of the grant of the patent: **28.03.2012**
(21) Application number: 08736276.0
(22) Date of filing: 16.04.2008
(51) Int. Cl.: H04L 1/16

(54) **RANDOM ACCESS COLLISION DETECTION**
DIREKTZUGRIFFS-KOLLISIONSDETEKTION
DÉTECTION DE COLLISION À ACCÈS ALÉATOIRE

(30) Priority: 28.05.2007 US 754329
(43) Date of publication of application: 17.03.2010
(73) Proprietor: Telefonaktiebolaget L M Ericsson (publ), 164 83 Stockholm (SE)
(72) Inventor: HAARTSEN, Jacobus, NL-7772 BG Hardenberg (NL)
(74) Representative: Åkerman, Mårten Lennart
(86) International application number: PCT/EP2008/054600
(87) International publication number: WO 2008/145454

(56) References cited:
- EP-A- 1 065 807
- WO-A-2004/084565
- XIANG FENG ET AL: "A CDMA-slotted ALOHA broadband system for multiservices" UNIVERSAL PERSONAL COMMUNICATIONS, 1998. ICUPC '98. IEEE 1998 INTERNAT IONAL CONFERENCE ON FLORENCE, ITALY 5-9 OCT. 1998, NEW YORK, NY, USA,IEEE, US, vol. 2, 5 October 1998 (1998-10-05), pages 1131-1135, XP010315004 ISBN: 978-0-7803-5106-6

## Description

### BACKGROUND

This invention relates to electronic communication systems, and in particular to wireless multiple-access communication systems.

In many communication systems, such as mobile telephone systems, a user equipment (UE), such as a mobile telephone or other remote terminal, requests access to the system by a random access (RA) procedure that is usually applied when the UE is not synchronized with signals, particularly uplink (UL) signals, in the system. Lack of synchronization typically exists at UE power-on and when the UE "wakes" from a low-power "sleep" mode of operation. The UE may wake up to re-synchronize, to check system control channels (e.g., a paging channel), or to perform mobility measurements. Uplink signals are sent from UEs to the system, such as a base station (BS) or cell, and downlink (DL) signals are sent from BSs to the UEs. In a simple RA procedure, UEs transmit RA messages at random times on a predetermined UL RA channel (RACH), and a receiver in the BS determines from RA messages that it receives which UEs are requesting access.

Many modern communication systems have their UL and DL signals organized into successive time slots, e.g., the GSM system, the new Third Generation (3G) Long-Term Evolution (LTE) system, and others. The 3G LTE system is currently under development, and is described in, for example, E. Dahlman et al., "The Long-Term Evolution of 3G", Ericsson Review No. 2, pp. 118-125 (June 2005).

Timing misalignments of UL transmissions, i.e., lack of UL synchronization, in such communication systems are disastrous. For example, overlaps between consecutive time slots cause interference between the UL transmissions of different UEs. In the 3G LTE system, the UL uses pre-coded orthogonal frequency division multiplexing (OFDM), and so UEs need to be time-aligned to keep the UEs orthogonal in the frequency domain. A UE may not know its proper UL timing even if the UE is synchronized with DL signals, such as a broadcast control channel (BCCH), because a signal's round-trip time (RTT) between the UE and the system may be unknown.

During an initial part of the RA procedure in such time-slotted communication systems, the UE typically transmits an RA preamble, which is a specific sequence of bits or symbols that has good auto- and cross-correlation properties. Today, generalized chirp-like (GCL) sequences are used as RA preambles because they have such good properties. The RA preamble is much shorter than a time slot reserved for the RA procedure, which leaves a guard period (GP) that is sufficient to prevent an RA preamble from overlapping with adjacent time slots.

Before the UE sends the RA preamble, it randomly selects one of a subset of GCL sequences that is BS- or cell-specific, which is to say that all UEs in the cell select sequences from that subset for their RA preambles. The number of suitable GCL sequences is limited, and is determined by the length of the sequence (i.e., the number of bits or symbols) and the correlation properties of the sequence. In general, the stricter the requirements on the correlation properties, the fewer the sequences that are suitable. For example, optimal cross-correlation properties can be obtained with zero-cross-correlation GCL sequences, and the number of available such sequences is about N_{S}/L_{Z}, where N_{S} is the sequence length and L_{Z} is the maximum sequence offset over which the cross-correlation is zero.

For the 3G LTE system, the length of an RA preamble is on the order of 400 symbols (i.e., N_{S} = 400), which leads to a total of about 256 available zero-cross-correlation GCL sequences for a maximum sequence offset of one. Those available sequences can be conveniently divided into 16 subsets of 16 sequences each, and the 16 subsets can be distributed among base stations in the communication system, subject to the usual condition that spatially adjacent BSs do not use the same subset.

With 16 sequences in a subset to choose from, each sequence is, in a sense, a temporary random 4-bit identification (ID) for a UE, and that temporary UE ID is typically included in a grant message sent by the BS to the UE in response to the RA attempt. Thus, the grant message, and also typically a timing alignment (TA) message, can be received by the proper UE. The TA message tells the UE how much to advance or retard the timing of its UL transmissions in order for those transmissions to arrive at the BS in time synchrony with other UL transmissions, e.g., transmissions from other UEs.

Because RA preambles are sent at random times from UEs that are at random distances from the BS receiver, more than one RA preamble can arrive at the BS at the same time. In GSM and 3G LTE systems, for example, two or more UEs may select different sequences from the subset for their RA preambles, and those UEs may carry out RA attempts at the same time in the same RA window. The receiver in the BS can typically resolve the different RA preambles, depending on the cross-correlation properties and the difference in power levels at which the RA preambles arrive at the BS.

In addition, however, two or more UEs may select the same sequence from the subset for their RA preambles and carry out RA attempts at the same time in the same RA window. Such RA preambles are said to "collide" at the BS, which is to say that the preambles interfere with each other. This is a problem because a BS typically cannot reliably distinguish between colliding RA preambles.

To reduce RA message collisions, U.S. Patent No. 5,544,196 to Tiedemann, Jr., et al. states that mobile stations in its code-division multiple access (CDMA) communication system use one or more randomization methods to distribute their RA messages. Those randomization methods include time-delaying the message transmissions by varying amounts, randomly selecting a pseudo-random (PN) code for spreading the transmissions, inserting a random delay between successive message transmissions if a BS response is not received, and inserting a random delay between successive groups of RA message transmissions.

European Patent Application EP 1 001 572 A2 states that it discloses an RA procedure that reduces the amount of collisions of access messages on a RACH by multiple mobile stations' attempting to gain system access concurrently. Instead of transmitting an access message on the RACH, a probe message is transmitted that is shorter in length than the access message, thereby reducing the chance of collisions with other probe messages. The full access message is subsequently sent on a traffic channel or a control channel designated by a BS that receives the probe message. Alternately, a data burst is transmitted over the designated traffic channel or a control channel.

According to its Abstract, International Patent Publication WO 2004/084565 A1 describes a method of detecting RA collisions of multiple UEs in a communication system having a BS and UEs that use a number of orthogonal or quasi-orthogonal PN sequences for random access. The BS correlates received RA signals with each PN sequence in order, obtains respective correlation windows, and finds the largest correlation peak value in the correlation windows. The correlation window is partitioned into a correlation peak value window and an edge window, and used to develop values that are compared to a threshold. When the threshold is met, more than one UE has used the respective PN sequence for random access.

Xiang Feng et al.. "A CDMA-Slotted ALOHA Broadband System for Multiservices", IEEE 1998 international Conference on Universal Personal Communications (ICUPC '98), vol. 2, pp. 1131-1135, Florence, Italy (5-9 Oct. 1998) states that in a CDMA-slotted ALOHA system, all transmitters use the same PN sequence but with different chip phases and packets that can be captured and received because of the autocorrelation properties of the PN sequence. A single PN spreading sequence is used, and to distinguish among UEs, each UE generates a random delay for the PN sequence before it transmits. When the difference between two UEs' randomly selected delays is large enough, a base station can resolve the UEs' signals due to the autocorrelation properties.

The probability of irresolvable RA preamble collisions increases as the number of RA preamble sequences decreases, which happens when stricter requirements are set on the auto- and cross-correlation properties, and leads to many possible problems. A BS could send a grant message that includes a random UE ID, and the two or more UEs would start uplink transmissions on the same allocated resource. Moreover, because the TA value is correct almost always for only one of the UEs, the transmission(s) of the other UE(s) will be out of synchronization, causing interference for other UEs.

To avoid those and other problems, it is therefore important to detect as early as possible that two or more UEs have selected the same RA preamble.

### SUMMARY

In accordance with aspects of this invention, there is provided a method in a receiver of determining a collision between received signals. The method includes correlating a received signal against as least one predetermined sequence, thereby generating at least one correlation result; identifying at least two peaks in the at least one correlation result; comparing a temporal separation of the identified peaks to a maximum delay spread; and determining that a collision occurred based on the comparing step.

In accordance with further aspects of this invention, there is provided a receiver in a communication system. The receiver includes at least one correlator configured to correlate a received signal with at least one predetermined sequence; a threshold device configured to identify peaks in an output signal from the at least one correlator, each peak indicating that the respective predetermined preamble sequence was received; a timer, in communication with the threshold device, for determining delay periods between peaks in the output signal; and a comparator configured to compare the delay periods to a maximum delay value.

In accordance with further aspects of this invention, there is provided a computer-readable medium having stored instructions that, when executed by an electronic processor, cause the processor to perform a method of determining a collision between received signals. The method includes correlating a received signal against at least one predetermined sequence, thereby generating at least one correlation result; identifying at least two peaks in the at least one correlation result; comparing a temporal separation of the identified peaks to a maximum delay spread; and determining that a collision occurred based on the comparing step.

### BRIEF DESCRIPTION OF THE DRAWINGS

The various objects, features, and advantages of this invention will be understood by reading this description in conjunction with the drawings, in which:
FIG. 1 is a block diagram of a communication system;
FIG. 2 is a frequency vs. time plot of a random access scheme in an uplink of a communication system;
FIG. 3 depicts variation in signal arrival depending on the distance between a transmitter and receiver;
FIG. 4 depicts an output signal from a correlator when two transmitters pick the same predetermined sequence;
FIG. 5 depicts an output signal from a correlator when a signal arrives along two paths; and
FIG. 6 is a flow chart of a method of determining signal collisions.

### DETAILED DESCRIPTION

The following description is given in terms of a cellular telephony system simply for convenience. The artisan will understand that this invention is not limited to such communication systems.

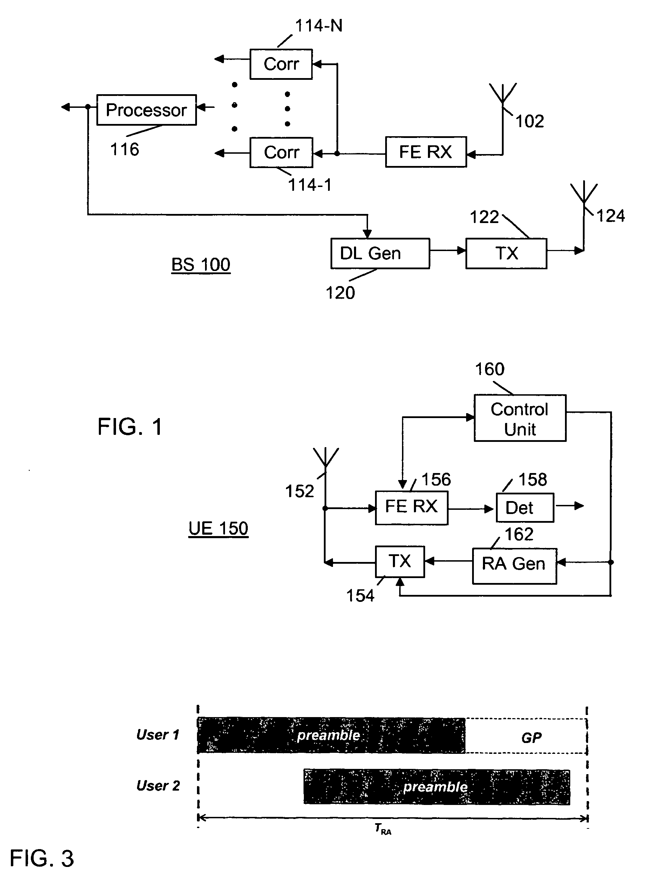

FIG. 1 is a block diagram of a communication system that includes a BS 100 and a UE 150. The communication system would typically include a plurality of BSs that may communicate with a plurality of UEs. For simplicity, only some of the parts of the BS 100 and UE 150 are shown in FIG. 1.

The BS 100 includes an antenna 102 that receives electromagnetic signals transmitted by the UE 150 and other remote terminals. It will be appreciated that although the antenna 102 is depicted as a single device, it may be implemented as several antennas for diversity reasons. A suitable receiver front-end (FE RX) 104 appropriately amplifies and down-converts the received electromagnetic signals to base-band as necessary, and the received signal produced by the FE RX 104 is provided to a bank of correlators 114-1, ..., 114-N, each of which correlates the received signal against a respective one of the RA preambles in use by the BS 100. The correlation output signals generated by the bank of correlators 114 are provided to a processor 116, which may be a programmed digital signal processor (DSP), an arrangement of comparators and logic gates, or other suitable device. The processor 116 looks for peaks in the correlation output signals of the correlators 114-1, ..., 114-N.

The BS 100 also includes a suitable DL channel signal generator 120, a transmitter (TX) 122, an antenna 124, and other suitable devices for transmitting DL signals to the UEs, such as one or more DL control channels.

The correlators 114 can be implemented in the time domain as sliding matched filters, or in the frequency domain by a processor that multiplies a fast Fourier transform (FFT) or other frequency-domain representation of the input signal by an FFT or other frequency-domain representation of the correlation sequence. If the output signal from a correlator 114 exceeds a pre-determined threshold, the processor 116 indicates that the respective preamble was received. That preamble sequence corresponds to a random UE ID that the BS uses in a response message sent by the BS to the UE to signal to the UE that the preamble was detected. The BS's response message also typically includes a TA value, which the processor 116 can derive from the time location of the peak in the correlator output signal, and an identification of an UL channel that the UE should use to continue its communication in a synchronized manner.

The UE 150 typically transmits and receives radio signals through an antenna 152 that, although depicted as a single device, may be implemented as several antennas for diversity reasons. The radio signals are generated by a transmitter (TX) 154 that takes base-band information and up-converts and amplifies it as necessary and an FE RX 156 that suitably down-converts and samples received signals. As schematically depicted in FIG. 1, signals produced by the FE RX 156 are provided to a detector 158 that produces information that is further processed as appropriate for the particular communication system. The TX 154 and FE RX 156 operate under the control of a suitable control unit 160, which may be a programmed electronic processor or similar device. The control unit 160 also causes an RA preamble generator 162 to generate a randomly selected one of the subset of RA preambles used by the BS 100, which is up-converted and amplified as necessary by the TX 154 for transmission by the antenna 152.

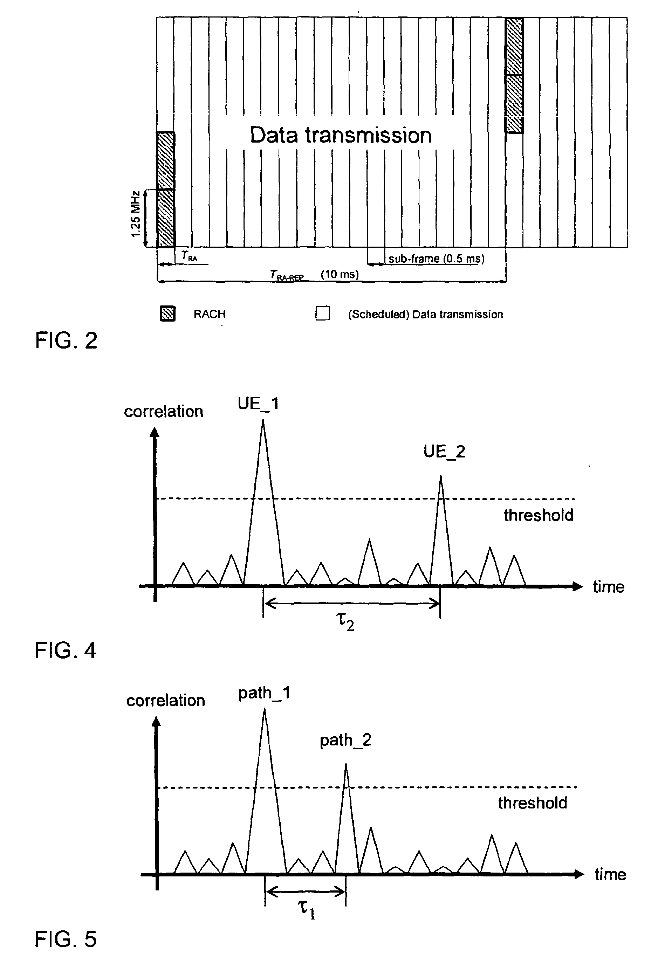

One RA scheme currently proposed for 3G LTE is depicted by FIG. 2, which is a frequency vs. time plot of an UL in the communication system. The RA scheme includes successive frames of twenty consecutive sub-frames that are RA windows defined at scheduled points in time and frequency for UEs to carry out RA attempts, i.e., to send RA preambles. As depicted in FIG. 2, the sub-frames are each 0.5 ms in duration (T_{RA}) and the frame structure repeats at intervals of 10 ms (T_{RA-REP}), but the artisan will understand that other arrangements are also suitable. In an RA attempt, a UE transmits data comprising an RA preamble having a duration that is much shorter than the duration of the RA window. Depending on the distance between the BS and the UE, the RA preamble may arrive at a base station earlier or later in an RA window as depicted in FIG. 3, and that uncertainty is accommodated by the difference between the durations of the preamble and RA window length, i.e., by the GP, which may also be called a guard time or idle period.

The bank of correlators 114 in a typical BS 100 correlates the RA preambles it receives against all possible RA preambles, i.e., the subset of sequences in use by the BS 100. Because the RTT depends on the radial distance between a BS and a UE, which amounts to 6.7 microseconds per kilometer (µs/km), RA preambles received by the BS from UEs that are radially separated by more than 1 km are separated in time by more than 6.7 µs, assuming that the UEs are synchronized to the DL signals from the BS. Because the bandwidth of the BS's processor 116 and other electronics is typically greater than 1 megahertz (MHz), the BS's timing resolution in the correlation output signals is typically something less than 1 µs, and so in principle the BS can resolve two peaks in its correlation output, i.e., the BS can detect an RA-preamble collision, when the transmitting UEs are radially separated by at least something less than 150 meters (m).

When the bandwidth of the correlation output signal is large enough, the correlator can resolve the same RA preamble transmitted by different UEs. An example is shown in FIG. 4, which depicts the output signal from one of the correlators 114 when two UEs pick the same preamble. The time difference T₂ between the correlation peaks UE_1, UE_2 that are greater than a threshold (indicated by the dashed line) and are due to the preamble received from a first UE and the same preamble received from a second UE, respectively, is generally the difference in RTTs between the UEs and the BS when each UE has a dominant path (strongest signal) and the detection is done on the dominant path.

Nevertheless, the same RA preamble sent by different UEs is not the only cause of multiple peaks in the BS's correlation output signals. Multi-path signal propagation also causes multiple peaks. An example is shown in FIG. 5, in which two paths generate peaks path_1, path_2 in the correlation output signal that are greater than a threshold (indicated by the dashed line) and that are separated by a time period T₁. The artisan will recall that the separation between multi-path peaks in the correlation result corresponds to the delay spread of the propagation channel.

The inventor has recognized that the BS should take the maximum delay spread into account in determining whether a collision has occurred. For example, a BS should decide that a collision has occurred only if two correlation peaks are separated in time by more than the maximum delay spread. In this way, all occurrences of multiple peaks in a correlation output signal are not treated as RA-preamble collisions. When the bandwidth of the correlation output signal is larger than the coherence bandwidth of the multi-path channel, the correlator can distinguish between the different signal propagation paths.

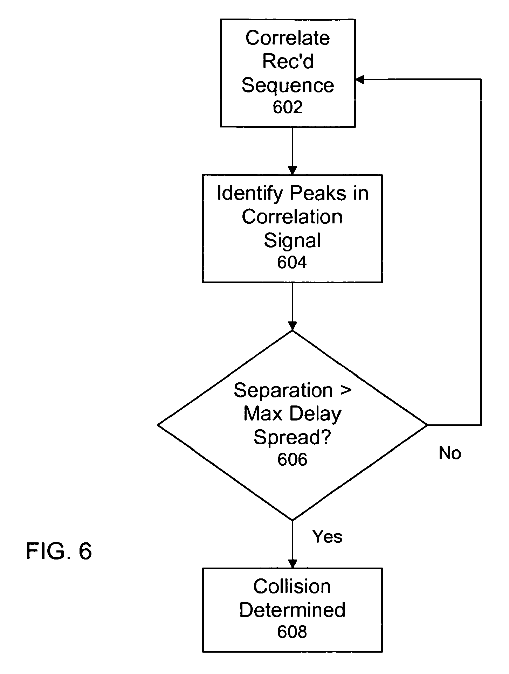

FIG. 6 is a flow chart of a method of determining signal collisions as described above. In step 602, a received signal is correlated with at least one predetermined sequence, such as a possible RA preamble. In step 604, peaks in an output signal produced by the correlation that exceed a threshold are identified. In step 606, the temporal separation between the identified peaks is determined and compared to a maximum delay spread value. If the temporal separation is greater than the maximum delay spread value (Yes in step 606), a collision is determined (step 608); otherwise, the process flow returns to step 602.

When a collision is determined, for example by the processor 116, the processor causes the BS 100 to transmit a negative ACK message on the DL that includes the UE ID for which a collision was detected. The message also indicates the reason for the negative ACK, namely, RA preamble collision, which signifies to the UEs that use that ID, and in particular the control units 160 in those UEs, that they should select new preambles and try to access again at the next RA window.

The BS 100 may even schedule an extra RA window that arrives before the ordinary RA window because the BS "knows" from the collision that several UEs are attempting access and so can speed up the access process. Such scheduling may be better done by a Layer 2 processor, i.e., a processor at the medium access control (MAC)/data link control (DLC) layer, rather than the processor 116, which is a Layer 1, or physical layer, processor. The operation of such a processor would be similar to the operation of the scheduler that allocates (radio) resources to the different UEs. The presence of an extra RA window can be indicated to the UEs over a shared DL control channel.

The maximum delay spread is simply the difference between the time of arrival of the first-to-arrive multi-path signal and the time of arrival of the last-to-arrive multi-path signal. The maximum delay spread can be determined in any suitable way. For example, the maximum delay spread can be determined from a path delay profile (PDP) generated by the correlators 114 and processor 116.

Methods of estimating PDPs are well known in the art. For example, a PDP can be estimated by correlating the received signal with an RA preamble for different time lags, where the longest time lag has a length corresponding to a worst-case assumption of the delay spread, e.g., 100 or so chips of the scrambling code. Then, signal peaks in the PDP (correlation result) indicate the times of arrival of the multi-path signals. Peaks can be identified as having powers greater than a threshold, e.g., 5% of the highest signal peak's power. The rest of the correlation result can then be assumed to indicate no signal. The time delay between the first and last peaks is the maximum delay spread.

The delay spread and the coherence bandwidth of a communication channel are equivalent measures of frequency selectivity of the channel, with the PDP and the frequency correlation function being a Fourier transform pair. Thus, a BS can also estimate the PDP simply by, for example, taking an inverse FFT (IFFT) of an estimate of the frequency correlation function. It can be advantageous to base an estimate of the delay spread on the coherence bandwidth rather than on a PDP because in some communication systems the coherence bandwidth is more easily measured than the delay spread. For example, in OFDM-based systems, the coherence bandwidth can be easily obtained by correlating sub-carrier signal strengths.

The inventor has also recognized that it is not always necessary for the BS to determine the maximum delay spread from its received signals. Instead, a maximum delay spread value can be predetermined. For example, a 3G LTE communication system takes into account multi-path propagation by having UEs include Cyclic Prefixes (CPs) in their UL signals. The CP duration is on the order of 5 µs, which generally corresponds to the maximum delay spread in a 3G LTE system, as well as other communication systems. It will be appreciated that the maximum delay spread needs to be shorter than the CP duration. Currently proposed 3G LTE systems have two CP lengths, one short CP for small- and medium-sized cells, and one long CP for large cells.

It will be appreciated that the CP is overhead in packets that enables a receiver to resolve echoes (multi-path). To minimize overhead, the CP length should not be larger than the maximum delay spread expected in the environment in which the communication system is deployed. At the same time, using a CP that is too short in a large cell is a mis-dimensioning that can lead to interference in the time and frequency domains of (pre-coded) OFDM signals. Thus, the maximum delay spread is a physical entity and the CP is a derivation; one usually selects the CP based on the expected maximum delay spread. If the RTT difference is larger than the CP, the difference is automatically larger than the maximum delay spread.

Letting the RTT for a first UE be called RTT1 and the RTT for a second UE be called RTT2, then it can be seen that the following situations may occur.

If |RTT1 - RTT2| > CP, or in other words, if T₂ > T₁, then the BS has a clear indication that multiple UEs picked the same preamble sequence. The BS can send a negative ACK message that includes the random UE ID, and that may further indicate the next RA window, which may be the next occurrence of an RA window in the ordinary structure depicted FIG. 2 or an extra scheduled RA window that arrives earlier than the next ordinary window.

If |RTT1 - RTT2| < CP, or in other words, if T₂ < T₁, then the BS cannot decide whether two UEs picked the same sequence or whether a single preamble has experienced multi-path propagation. The BS may then proceed along different lines.

At one extreme, the BS may assume that a single preamble was sent, and so send a positive ACK that includes the random UE ID. Any collision on the allocated resource must then be resolved in following communications. The problem of a UE's transmitting outside the proper timing limits, i.e., using the wrong TA, is limited because the difference between the RTTs and thus the compensating TA value is within the CP.

At the other extreme, the base station may always assume that a collision has occurred, and direct the UEs to another RA window, which may be an extra scheduled RA window with a shorter duration, e.g., with no GP, as the TA is already accurate within the CP. When the same situation occurs again but on a different correlator because most probably a different sequence is selected, it indeed was a multi-path situation and a positive ACK can be sent.

As a middle ground between the two extremes, the base station may examine the correlation output signal more carefully. In particular, the processor 116 may derive the delay profile from the correlator output signal, and compare it to the delay profile(s) found on UL traffic channel(s). If the comparison indicates that the delay profiles are similar, the BS can infer that most probably the preamble has experienced multi-path propagation and no collision has occurred. The BS can then issue a positive ACK. If the delay profiles differ greatly, apparently a collision has occurred, and the base station issues a negative ACK.

In all cases, actions are taken that can resolve collisions more quickly, reducing access delays. Earlier detection of a collision is preferable because when two or more UEs select the same sequence, the RA procedure is delayed considerably and valuable resources are wasted. In addition with the collision detection methods described in this application, preamble sequences having optimal correlation properties can be used, while reducing the effect of collisions that are more likely due to the restricted number of sequences to select from.

It is expected that this invention can be implemented in a wide variety of environments, including for example mobile communication devices. It will be appreciated that procedures described above are carried out repetitively as necessary. To facilitate understanding, many aspects of the invention are described in terms of sequences of actions that can be performed by, for example, elements of a programmable computer system. It will be recognized that various actions could be performed by specialized circuits (e.g., discrete logic gates interconnected to perform a specialized function or application-specific integrated circuits), by program instructions executed by one or more processors, or by a combination of both. Many communication devices can easily carry out the computations and determinations described here with their programmable processors and application-specific integrated circuits.

Moreover, the invention described here can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions. As used here, a "computer-readable medium" can be any means that can contain, store, communicate, propagate, or transport the program for use by or in connection with the instruction-execution system, apparatus, or device. The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium include an electrical connection having one or more wires, a portable computer diskette, a RAM, a ROM, an erasable programmable read-only memory (EPROM or Flash memory), and an optical fiber.

Thus, the invention may be embodied in many different forms, not all of which are described above, and all such forms are contemplated to be within the scope of the invention. For each of the various aspects of the invention, any such form may be referred to as "logic configured to" perform a described action, or alternatively as "logic that" performs a described action.

It is emphasized that the terms "comprises" and "comprising", when used in this application, specify the presence of stated features, integers, steps, or components and do not preclude the presence or addition of one or more other features, integers, steps, components, or groups thereof.
The particular embodiments described above are merely illustrative and should not be considered restrictive in any way. The scope of the invention is determined by the following claims

## Claims

1. A method in a receiver (100) of determining a collision between received signals, comprising:
correlating a received signal against at least one predetermined preamble sequence, thereby generating at least one correlation result;
identifying at least two peaks in the at least one correlation result each peak indicating that a respective predetermined preamble sequence was received;
comparing delay periods of the identified peaks to a maximum delay spread value wherein the maximum delay spread value is a difference between a time of arrival of a first-to-arrive multi-path signal and a time of arrival of a last-to-arrive multi-path signal;
determining that a collision occurred when the identified peaks are separated in time by more than the maximum delay spread value; and
when a collision is determined, sending a negative ACK message that includes the preamble sequence for which a collision was detected and an indication of a reason for the negative ACK, wherein the reason signifies that a new preamble sequence should be selected.

2. The method of claim 1, further comprising, when a collision is determined, scheduling an extra window for transmitted signals that arrives before an ordinary window for transmitted signals.

3. The method of claim 1, wherein a duration of a cyclic prefix, corresponds to the maximum delay spread value.

4. The method of claim 1, further comprising, if it cannot be determined that a collision occurred; performing one of the following:
sending a positive ACK message that includes an identification;
sending a direction message to a random access window; or
deriving a path delay profile from the at least one correlation result.

5. A receiver (100) for a communication system, comprising:
at least one correlator (114-1, ..., 114-N) configured.to correlate a received signal with at least one predetermined preamble sequence;
a threshold device (116) configured to identify, at least two peaks in an output signal from the at least one correlator, each peak indicating that a respective predetermined preamble sequence was received;
a timer (116), in communication with the threshold device, for determining delay periods between peaks in the output signal;
a comparator (116) configured to compare the delay periods to a maximum delay spread value and to determine that a collision occurred when the identified peaks are separated in time by more than the maximum delay spread value, wherein the maximum delay spread value is a difference between a time of arrival of a first-to-arrive multi-path signal and a time of arrival of a last-to-arrive multi-path signal; and
a processor (116) configured to cause sending, when a collision is determined, a negative ACK message that includes the preamble sequence was detected and an indication of a reason for the negative ACK, wherein the reason signifies that a new provide spread sequence should be selected.

6. The receiver of claim 5, wherein the maximum delay spread value corresponds to a length of a cyclic prefix of the predetermined preamble sequence.

7. The receiver of claim 5, further comprising a processor configured to determine the maximum delay spread value from the output signal from the at least one correlator.

8. The receiver of claim 5, further comprising means for comparing the maximum delay spread value at least one delay profile found on at least one uplink traffic channel spread value to

9. The receiver of claim 5, wherein the at least one correlator comprises a sliding matched filter.

10. A computer-readable medium having stored instructions that, when executed by an electronic processor (100), cause the processor to perform a method of determining a collision between received signals, comprising:
correlating a received signal against at least one predetermined preamble sequence thereby generating at least one correlation result;
identifying at least two peaks in the at least one correlation result, each peak indicating that a respective predetermined preamble sequence was received;
comparing delay periods of the identified peaks to a maximum delay spread value wherein the maximum delay spread value is a difference between a time of arrival of a first-to-arrive multi-path signal and a time of arrival of a last-to-arrive multi-path signal;
determining that a collision occurred when the identified peaks are separated in time by more than the maximum delay spread value; and
when a collision is determined, sending a negative ACK message that includes the preamble sequence for which a collision was detected and an indication of a reason for the negative ACK, wherein the reason signifies that a new preamble sequence should be selected.

11. The medium of claim 10, wherein the method further comprises, when a collision is determined, scheduling an extra window for transmitted signals that arrives before an ordinary window for transmitted signals.

12. The medium of claim 10, wherein a duration of a cyclic prefix corresponds to the maximum delay spread value.

13. The medium of claim 10, wherein the method further comprises, if it cannot be determined that a collision occurred, performing one of the following:
sending a positive ACK message that includes an identification;
sending a direction message to a random access window; or
deriving a path delay profile from the at least one correlation result.

## Patentansprüche

1. Verfahren in einem Empfänger (100) zum Bestimmen einer Kollision zwischen empfangenen Signalen, umfassend:
Korrelieren eines empfangenen Signals mit mindestens einer vorgegebenen Präambelsequenz, um dadurch mindestens ein Korrelationsergebnis zu erzeugen;
Identifizieren mindestens zweier Spitzen in dem mindestens einen Korrelationsergebnis, wobei jede Spitze anzeigt, dass eine jeweilige vorgegebene Präambelsequenz empfangen wurde;
Vergleichen von Verzögerungsperioden der identifizierten Spitzen mit einem maximalen Verzögerungsspreizungswert, wobei der maximale Verzögerungsspreizungswert eine Differenz zwischen einer Ankunftszeit eines zuerst ankommenden Mehrwegsignals und einer Ankunftszeit eines zuletzt ankommenden Mehrwegsignals ist;
Bestimmen, dass eine Kollision stattfand, wenn die identifizierten Spitzen zeitlich um mehr als den maximalen Verzögerungsspreizungswert getrennt sind; und
Senden, wenn eine Kollision bestimmt wird, einer negativen ACK-Nachricht, welche die Präambelsequenz, für welche eine Kollision erkannt wurde, und eine Angabe eines Grundes für die negative ACK enthält, wobei der Grund besagt, dass eine neue Präambelsequenz ausgewählt werden sollte.

2. Verfahren nach Anspruch 1, ferner umfassend, wenn eine Kollision bestimmt wird, ein Disponieren eines außerordentlichen Fensters für gesendete Signale, die vor einem ordentlichen Fenster für gesendete Signale ankommen.

3. Verfahren nach Anspruch 1, wobei eine Dauer eines **zyklischen Präfixes dem maximalen** Verzögerungsspreizungswert entspricht.

4. Verfahren nach Anspruch 1, ferner umfassend, wenn nicht bestimmt werden kann, dass eine Kollision stattfand, ein Durchführen von Folgendem:
Senden einer positiven ACK-Nachricht, die eine Identifikation enthält;
Senden einer Richtungsnachricht an ein Direktzugriffsfenster; oder
Ableiten eines Pfadverzögerungsprofils von dem mindestens einen Korrelationsergebnis.

5. Empfänger (100) für ein Kommunikationssystem, umfassend:
mindestens einen Korrelator (114-1,...., 114-N), der so konfiguriert ist, dass er ein empfangenes Signal mit mindestens einer vorgegebenen Präambelsequenz korreliert;
eine Schwellenvorrichtung (116), die so konfiguriert ist, dass sie mindestens zwei Spitzen in einem Ausgangssignal von dem mindestens einen Korrelator identifiziert, wobei jede Spitze anzeigt, dass eine jeweilige vorgegebene Präambelsequenz empfangen wurde;
einen Timer (116) in Kommunikation mit der Schwellenvorrichtung zum Bestimmen von Verzögerungsperioden zwischen Spitzen im Ausgangssignal;
einen Komparator (116), der so konfiguriert ist, dass er die Verzögerungsperioden mit einem maximalen Verzögerungsspreizungswert vergleicht und bestimmt,
dass eine Kollision stattfand, wenn die identifizierten Spitzen zeitlich um mehr als den maximalen Verzögerungsspreizungswert getrennt sind, wobei der maximale Verzögerungsspreizungswert eine Differenz zwischen einer Ankunftszeit eines zuerst ankommenden Mehrwegsignals und einer Ankunftszeit eines zuletzt ankommenden Mehrwegsignals ist; und
einen Prozessor (116), der so ausgelegt ist, dass er,
wenn eine Kollision bestimmt wird, das Senden einer negativen ACK-Nachricht veranlasst, welche die Präambelsequenz, für welche eine Kollision erkannt wurde, und eine Angabe eines Grundes für die negative ACK enthält, wobei der Grund besagt, dass eine neue Präambelsequenz ausgewählt werden sollte.

6. Empfänger nach Anspruch 5, wobei der maximale Verzögerungsspreizungswert einer Länge eines zyklischen Präfixes der vorgegebenen Präambelsequenz entspricht.

7. Empfänger nach Anspruch 5, ferner umfassend einen Prozessor, der so konfiguriert ist, dass er den maximalen Verzögerungsspreizungswert aus dem Ausgangssignal von dem mindestens einen Korrelator bestimmt.

8. Empfänger nach Anspruch 5, ferner umfassend Mittel zum Vergleichen des maximalen Verzögerungsspreizungswerts mit mindestens einem Verzögerungsprofil, das auf mindestens einem Aufwärtsverkehrskanal festgestellt wird.

9. Empfänger nach Anspruch 5, wobei der mindestens eine Korrelator ein angepasstes Gleitfilter umfasst.

10. Computerlesbares Medium mit gespeicherten Anweisungen, die, wenn durch einen elektronischen Prozessor (100) ausgeführt, den Prozessor veranlassen, ein Verfahren zum Bestimmen einer Kollision zwischen empfangenen Signalen durchzuführen, das umfasst:
Korrelieren eines empfangenen Signals mit mindestens einer vorgegebenen Präambelsequenz, um dadurch mindestens ein Korrelationsergebnis zu erzeugen;
Identifizieren mindestens zweier Spitzen in dem mindestens einen Korrelationsergebnis, wobei jede Spitze anzeigt, dass eine jeweilige vorgegebene Präambelsequenz empfangen wurde;
Vergleichen von Verzögerungsperioden der identifizierten Spitzen mit einem maximalen Verzögerungsspreizungswert, wobei der maximale Verzögerungsspreizungswert eine Differenz zwischen einer Ankunftszeit eines zuerst ankommenden Mehrwegsignals und einer Ankunftszeit eines zuletzt ankommenden Mehrwegsignals ist;
Bestimmen, dass eine Kollision stattfand, wenn die identifizierten Spitzen zeitlich um mehr als den maximalen Verzögerungsspreizungswert getrennt sind; und
Senden, wenn eine Kollision bestimmt wird, einer negativen ACK-Nachricht, welche die Präambelsequenz, für welche eine Kollision erkannt wurde, und eine Angabe eines Grundes für die negative ACK enthält, wobei der Grund besagt, dass eine neue Präambelsequenz ausgewählt werden sollte.

11. Medium nach Anspruch 10, wobei das Verfahren, wenn eine Kollision bestimmt wird, ferner ein Disponieren eines außerordentlichen Fensters für gesendete Signale umfasst, die vor einem ordentlichen Fenster für gesendete Signale ankommen.

12. Medium nach Anspruch 10, wobei eine Dauer eines zyklischen Präfixes dem maximalen Verzögerungsspreizungswert entspricht.

13. Medium nach Anspruch 10, wobei das Verfahren, wenn nicht bestimmt werden kann, dass eine Kollision stattfand, ferner ein Durchführen von Folgendem umfasst:
Senden einer positiven ACK-Nachricht, die eine Identifikation enthält;
Senden einer Richtungsnachricht an ein Direktzugriffsfenster; oder
Ableiten eines Pfadverzögerungsprofils von dem mindestens einen Korrelationsergebnis.

## Revendications

1. Procédé dans un récepteur (100) pour déterminer une collision entre des signaux reçus, comprenant de :
corréler un signal reçu contre au moins une séquence de préambule prédéterminée en générant ainsi au moins un résultat de corrélation ;
identifier au moins deux pics dans le au moins un résultat de corrélation, chaque pic indiquant qu'une séquence de préambule prédéterminée respective a été reçue ;
comparer des périodes de délai des pics identifiés à une valeur de défilement de temps de propagation maximale, dans lequel la valeur de défilement de temps de propagation maximale est une différence entre un temps d'arrivée d'un signal multi-trajets premier arrivé et un temps d'arrivée d'un signal multi-trajets dernier arrive ;
déterminer qu'une collision a eu lieu quand les pics identifiés sont séparés dans le temps par plus d'un défilement de temps de propagation maximal ; et
quand une collision est déterminée, envoyer un message ACK négatif qui inclut la séquence de préambule pour laquelle une collision a été détectée et une indication d'une raison pour l'ACK négatif, dans lequel la raison signifie qu'un nouveau préambule de séquence devrait être sélectionné.

2. Procédé selon la revendication 1, comprenant en outre, quand une collision est déterminée, de programmer une fenêtre supplémentaire pour les signaux transmis qui arrive avant une fenêtre ordinaire pour les signaux transmis.

3. Procédé selon la revendication 1, dans lequel une durée d'un préfixe cyclique correspond à la valeur de défilement de temps de propagation maximale.

4. Procédé selon la revendication 1, comprenant en outre, si il ne peut pas être déterminé qu'une collision a eu lieu, d'effectuer une des étapes suivantes:
envoyer un message ACK positif qui inclut une identification ;
envoyer un message de direction à une fenêtre d'accès aléatoire ; ou
déduire un profil de temps de propagation sur trajet d'après au moins un résultat de corrélation.

5. Récepteur (100) pour un système de communication, comprenant :
au moins un corrélateur (114-1,...,114-N) configuré pour corréler un signal reçu avec au moins une séquence de préambule prédéterminée ;
un dispositif de seuil (116) configuré pour identifier au moins deux pics dans un signal de sortie d'après le au moins un corrélateur, chaque pic indiquant que une séquence de préambule prédéterminée respective a été reçue ;
un temporisateur (116), en communication avec le dispositif de seuil, pour déterminer des périodes de délai entre des pics dans le signal de sortie ;
un comparateur (116) configuré pour comparer les périodes de délai avec une valeur de défilement de temps de propagation maximale et pour déterminer qu'une collision a eu lieu quand les pics identifiés sont séparés dans le temps par plus de la valeur de défilement de temps de propagation maximale, dans lequel la valeur de défilement de temps de propagation maximale est une différence entre un temps d'arrivée d'un signal multi-trajets premier arrivé et un temps d'arrivée d'un signal multi-trajets dernier arrivé ; et
un processeur (116) configuré pour provoquer l'envoi, quand une collision est déterminée, d'un message ACK négatif qui inclut la séquence de préambule pour laquelle une collision a été détectée et une indication d'une raison pour l'ACK négatif, dans lequel la raison signifie qu'une nouvelle séquence de préambule devrait être sélectionnée.

6. Récepteur selon la revendication 5, dans lequel la valeur de défilement de temps de propagation maximale correspond à une longueur d'un préfixe cyclique de la séquence de préambule prédéterminée.

7. Récepteur selon la revendication 5, comprenant en outre un processeur configuré afin de déterminer la valeur de défilement de temps de propagation maximale d'après le signal de sortie provenant d'au moins un corrélateur.

8. Récepteur selon la revendication 5, comprenant en outreun moyen pour comparer la valeur de défilement de temps de propagation maximale avec au moins un profil avec au moins un profil de délai trouvé sur au moins un canal de trafic en liaison montante.

9. Récepteur selon la revendication 5, dans lequel le au moins un corrélateur comprend un filtre coulissant accordé.

10. Support lisible par ordinateur sur lequel sont mémorisées des instructions qui, quand elles sont exécutées par un processeur électronique (100), amènent le processeur à mettre en oeuvre un procédé de détermination d'une collision entre des signaux reçus, comprenant de :
corréler un signal reçu contre au moins une séquence de préambule prédéterminée en générant ainsi au moins un résultat de corrélation ;
identifier au moins deux pics dans le au moins un résultat de corrélation, chaque pic indiquant qu'une séquence de préambule prédéterminée respective a été reçue ;
comparer des périodes de délai des pics identifiés à une valeur de défilement de temps de propagation maximale, dans lequel la valeur de défilement de temps de propagation maximale est une différence entre un temps d'arrivée d'un signal multi-trajets premier arrivé et un temps d'arrivée d'un signal multi-trajets dernier arrivé ;
déterminer qu'une collision a eu lieu quand les pics identifiés sont séparés dans le temps par plus d'un défilement de temps de propagation maximal ; et
quand une collision est déterminée, envoyer un message ACK négatif qui inclut la séquence de préambule pour laquelle une collision a été détectée et une indication d'une raison pour l'ACK négatif, dans lequel la raison signifie qu'un nouveau préambule de séquence devrait être sélectionné.

11. Support selon la revendication 10, dans lequel le procédé comprend en outre, quand une collision est déterminée, de programmer une fenêtre supplémentaire pour les signaux transmis qui arrive avant une fenêtre ordinaire pour les signaux transmis.

12. Support selon la revendication 10, une durée d'un préfixe cyclique correspond à la valeur de défilement de temps de propagation maximale.

13. Support selon la revendication 10, dans lequel le procédé comprend en outre, si il ne peut pas être déterminé qu'une collision a eu lieu, d'effectuer une des étapes suivantes:
envoyer un message ACK positif qui inclut une identification ;
envoyer un message de direction à une fenêtre d'accès aléatoire ; ou
déduire un profil de temps de propagation sur trajet d'après au moins un résultat de corrélation.
